# EUROPEAN PATENT APPLICATION

(11) **EP 3 901 115 A1**
(43) Date of publication of application: **27.10.2021**
(21) Application number: 20171365.8
(22) Date of filing: 24.04.2020
(51) Int. Cl.: C04B 35/01, C01G 53/00, C04B 35/622, H01C 7/04, H01C 17/065

(54) **A PRINTABLE NTC INK COMPOSITION AND METHOD OF MANUFACTURING THEREOF**

(71) Applicant: Nederlandse Organisatie voor toegepast- natuurwetenschappelijk Onderzoek TNO, 2595 DA 's-Gravenhage (NL)
(72) Inventor: GROEN, Wilhelm Albert, 2595 DA 's-Gravenhage (NL); ZALAR, Peter, 2595 DA 's-Gravenhage (NL); SMITS, Edsger Constant Pieter, 2595 DA 's-Gravenhage (NL)
(74) Representative: V.O.

(57) **Abstract**

The present disclosure relates a printable NTC material and to a method of manufacturing the printable NTC material. The printable NTC material particles. The particles comprising a spinel phase, preferably a C-spinel phase, having a general formula M₃O₄ comprising at least a first metal M^{I} that is manganese (Mn) and second metal M^{II} that is nickel (Ni). In addition the particles includes nickel oxide (NiO) phase. The printable NTC material can be dispersed in a printable NTC ink comprising a dispersant, from which a NTC product, e.g. a thermistor, can be formed, e.g., after drying of the dispersant. Optionally, the spinel phase comprises a further metal M^{III}. The weight fraction of nickel oxide (NiO) with respect to the overall mass of the printable NTC material is preferably in a range between one and twenty weight percent.

## Description

### TECHNICAL FIELD AND BACKGROUND

The present disclosure relates to a negative temperature coefficient (NTC) material, in particular a powder, and method of manufacturing thereof. The present disclosure further relates to a printable ink composition comprising the NTC material and to a method of manufacturing thereof.

Negative Temperature Coefficient (NTC) materials, e.g., ceramics are used as sensing material for temperature sensors in a wide variety of applications. These include washing machines, battery chargers and air- conditioning units. NTC ceramics are based on ceramics containing mainly the oxides of transition elements like Mn, Fe, Co, Ni and Cu. A dense homogeneous ceramic, e.g. single phase ceramic, is typically obtained by sintering. Manufacturing of dense ceramics typically includes heating a mixture of precursor materials in the presence of air, to a temperature of about twelve hundred degrees centigrade or more. At these temperatures these materials are observed to crystallize into a single spinel crystal structure that yields the desired NTC properties.

To obtain a ceramic NTC product, e.g., a temperature sensor of a given shape or dimension, two principal routes are known. The first involves sintering a mixture of precursor materials to a pre-defined form, e.g., in a mould. Normally it is pressed into the form by uniaxial or isostatic pressure. After sintering the ceramic scan be further machined into a final form, e.g. by sawing and/or mechanical milling In this way a dense NTC product having a predefined shape, e.g., an active component of a temperature sensor, can be obtained. Forming sensors by sintering starting materials in a desired shape requires the design and manufacture of a mould; rendering the process, slow, costly, inflexible to design changes, and/or less suitable for small batch production processes. Alternatively, NTC products having a custom shape can be obtained by depositing, e.g. sputtering of thin films or printing, a composition comprising NTC particles of a preformed ceramic. Such particles may be obtained by milling or grinding pre-fired or sintered NTC products.

US5976421 discloses a thermistor (also referred to as NTC resistor) of a spinel indium-containing oxide-ceramic material. The manufacturing includes shaping of a mixture of a binder composition and a pre-calcined mixture of suitable starting compounds of metal oxides in to a shaped form. The shaped form is sintered in a sintering operation at 1250 °C to form the spinel NTC phase. The pre-calcined metal oxide mixture is made by weighing suitable metal precursor compounds in a ratio according to the desired spinel composition.

WO2018164570 discloses a printed temperature sensor comprising a sensor material comprising semi-conducting micro-particles comprising a ceramic NTC material with a negative temperature coefficient. The sensor material is formed by mixing micro particles with a strong NTC behavior in a dielectric matrix composition, for example comprising a polymer, with a solvent to form the sensor material as an ink or paste. The ink or paste is hardened or cured by crosslinking the dielectric matrix and/or evaporating the solvent without melting or sintering the micro-particles.

The present invention aims to improve on the above by providing a printable NTC ink composition which benefits from improved applicability and/or provides improved stability over time with respect to elevated temperatures and/or at high humidity.

### SUMMARY

Aspects of the present disclosure relate to a method of manufacturing an NTC ink composition. The method comprises manufacturing a printable NTC material comprising particles. The particles include a spinel phase comprising manganese (Mn) and nickel (Ni) and a nickel oxide phase (NiO). The method further comprises dispersing said printable NTC material in a suitable printable carrier. Manufacturing the printable NTC material comprises mixing particles of at least a first ceramic precursor material comprising Mn oxide and particles of a second ceramic precursor material comprising Ni oxide. The particles of the first and second ceramic precursor material have a diameter in a range between one hundred nanometer and one hundred micrometer. The second ceramic precursor material is added to the first ceramic precursor for forming the spinel phase and nickel oxide phase as a second phase. Manufacturing the printable NTC material further comprises heating the mixture of ceramic precursor materials at a temperature between 800 °C and 1000 °C in the presence oxygen to form the printable NTC material comprising the particles that include a spinel phase and a nickel oxide phase. The spinel can be characterized by a generic formula M^{I}M^{II}O₄, wherein the spinel comprises Mn and Ni. The weight fraction of the nickel oxide phase with respect to the overall mass of the printable NTC material is in a range between one and thirty weight percent.

In line with a further aspect, the present invention relates to an NTC ink composition. The NTC ink composition comprises the NTC material, e.g. the printable NTC material obtainable by the method according to the invention. The printable NTC ceramic ink composition comprises an acceptable printable carrier and the printable NTC material dispersed therein. The printable NTC material comprises particles having a diameter in a range between one hundred nanometer and fifty micrometer. At least a substantial part of the particles comprises a spinel phase and a nickel oxide phase. The spinel phase can be characterized by a generic formula M^{I}M^{II}O₄, wherein M^{I} represents Mn, and wherein M^{II} comprises Mn and Ni. The weight fraction of nickel oxide which is present as second phase with respect to the overall mass of the printable NTC material is in a range between one and thirty weight percent. Typically, the printable medium comprises a (curable)polymer and/or recursor thereto, a solvent or mixture of solvents, and optionally a dispersant.

The NTC ink composition can be used to manufacture a NTC product, e.g., a thermistor, in a method comprising removal of solvents. Depending on the chemistry of the polymer the method can comprise curing of the polymer. Advantageously, the ink allows forming, e.g., printing, NTC products product having the improved NTC properties as explained herein. The NTC products can be provided in a broad variety of three dimensional geometries without a required use of complex shaping steps and/or use of a sintering step.

### BRIEF DESCRIPTION OF DRAWINGS

These and other features, aspects, and advantages of the apparatus, systems and methods of the present disclosure will become better understood from the following description, appended claims, and accompanying drawing wherein:
FIG 1 depicts a phase diagram of Mn-Ni-oxide based compositions;
FIG 2 depicts a phase diagram of Mn-Ni-oxide based compositions obtained at a cooling rate of 300°C/hour (top) and quenched (bottom);
FIG 3 schematically depicts the method manufacturing a NTC ink composition according to the invention;
FIG 4 depicts an XRD diffraction pattern of a printable NTC material according to the invention; and
FIG 5 compares the time behavior of a reference thermistor and thermistors manufactured using an ink according to the invention.

### DESCRIPTION OF EMBODIMENTS

Terminology used for describing particular embodiments is not intended to be limiting of the invention. As used herein, the singular forms "a", "an" and "the" are intended to include the plural forms as well, unless the context clearly indicates otherwise. The term "and/or" includes any and all combinations of one or more of the associated listed items. It will be understood that the terms "comprises" and/or "comprising" specify the presence of stated features but do not preclude the presence or addition of one or more other features. It will be further understood that when a particular step of a method is referred to as subsequent to another step, it can directly follow said other step or one or more intermediate steps may be carried out before carrying out the particular step, unless specified otherwise. Likewise it will be understood that when a connection between structures or components is described, this connection may be established directly or through intermediate structures or components unless specified otherwise.

The invention is described more fully hereinafter with reference to the accompanying drawings, in which embodiments of the invention are shown. In the drawings, the absolute and relative sizes of systems, components, layers, and regions may be exaggerated for clarity. Embodiments may be described with reference to schematic and/or cross-section illustrations of possibly idealized embodiments and intermediate structures of the invention. In the description and drawings, like numbers refer to like elements throughout. Relative terms as well as derivatives thereof should be construed to refer to the orientation as then described or as shown in the drawing under discussion. These relative terms are for convenience of description and do not require that the system be constructed or operated in a particular orientation unless stated otherwise.

As used herein the term 'ceramic' or 'dense ceramic' can be understood to relate to a sintered macroscopic product, e.g. a an NTC active element of a sensor that formed of sintered precursor material as opposed to NTC materials formed with the NTC particles of the present invention in which the particles can be understood to not be sintered to a single macroscopic phase.

Spinels can be understood as a class of minerals of general formulation AB₂X₄ or M^{I}M^{II}O₄. Spinels crystallize in the cubic (isometric) crystal system, with the X anions (typically chalcogens, like oxygen) arranged in a cubic close-packed lattice and the cations A and B occupying some or all of the octahedral and tetrahedral sites in the lattice. The mineral spinel MgAl₂O₄ has a normal spinel structure. Note that for low Ni contents, so high Mn content, a tetragonally deformed spinel is formed.

In known methods of manufacturing ceramic, e.g., WO2018164570 or US5976421, the materials (precursors) are typically provided in relative ratio such that after calcination a single spin phase is formed. As explained in a publication by Groen et al. (W.A. Groen, C. Metzmacher, P. Huppertz and S. Schuurman, "Aging of NTC Ceramics in the system Mn-Ni-Fe-O," Journal of Electroceramics 7, 77 (2001), in order to obtain ceramics which are stable in the long-term, a composition is needed which is close to where the formation of NiO is observed. This means that the composition of should be around Mn(Mn_{1.35}Ni_{0.65})O₄ for ceramics sintered at a temperature of 1200 °C. If one goes higher in Ni content a ceramic is formed wherein NiO is formed next to the spinel phase.

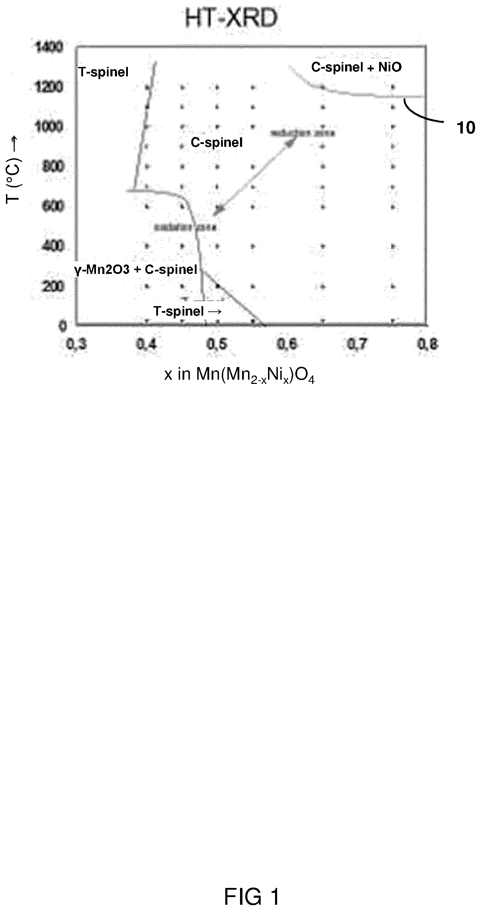

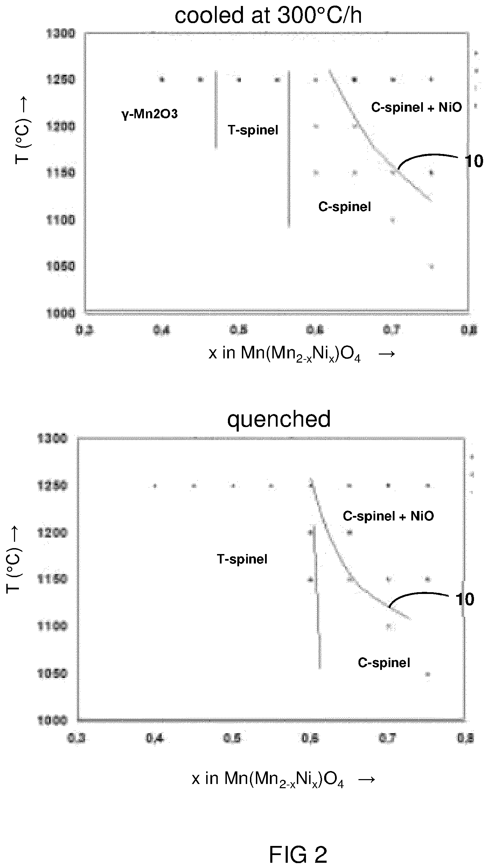

FIG 1 depicts the experimentally derived phase diagrams for the formation of ceramics in the Mn-Ni-oxides system according to the invention. FIG 2 details the phase diagram of the Mn-Ni-oxide system in a temperature range between 1000 and 1300 °C. In FIGs 1 and 2 the observed phases are marked in the corresponding sections of the phase diagrams. Some of the tested compositions are marked with a dot. Tested compositions are marked with a dot. The top diagram of Fig 2 is obtained for systems obtained at cooling rate of 300°C/hour, the bottom diagram is for systems that are quenched after heating.

As disclosed herein, and as can be seen in FIGs 1 and 2, ceramics which are essentially formed of a single spinel phase having a high nickel content (e.g. Mn₃₋ₓNiₓ with x> about 0.6) can be manufactured so long as the heating does not result in crossing phase boundary 10, e.g., so long as the temperature does not exceed about 1050°C. By not sintering the printable NTC material and/or not exposing the mixture of ceramic precursors to temperatures in excess of about 1050 °C formation of a ceramic with a macro phase separated second phase can be avoided. Formation of a multi-phase ceramic makes it difficult to make good quality thermistors in terms of homogeneity and/or in terms of long-term stability. In general it is believed that is difficult to make good uniform ceramic products from a multi phase system.

In the field of NTC ceramics, ceramics or mixtures for the manufacturing thereof, having the composition as specified herein, i.e. having a comparatively high nickel or nickel oxide content, are typically considered unsuitable as starting materials for the manufacturing of ceramic thermistors as the sintering of such mixtures which is believed to be an essential step is known to lead to disadvantageous phase separation. Furthermore the phase separation process will lead to the formation of inhomogeneous ceramics, e.g. sintered products comprising a continuous macro phase-separated NiO phase which, e.g., upon exposure to a thermal load may lead to cracking of the sintered product due to inherent difference in thermal expansion of the spinel phase and the NiO phase.

As explained herein, the inventors surprisingly found that sensor materials, e.g., thermistors, formed from the printable NTC material, advantageously display an improved long term stability and/or a reduced drift over time of the electrical resistance. By not subjecting the printable NTC material to a sintering step, which is usually performed to create dense ceramics, macro scale phase separation, e.g., de-mixing or formation of a multi-phase ceramic, e.g., a ceramic having a separate nickel oxide phase in addition to a Mn-Ni spinel phase can be avoided.

Without wishing to be bound be any theory inventors believe the observed stability can be attributed to the comparatively high nickel oxide content that is incorporated in the particles of the printable NTC material (within the mesoscale), as opposed to on a macro phase scale, whereas problems regarding mechanical stability, e.g., in response to thermal load, can be mitigated

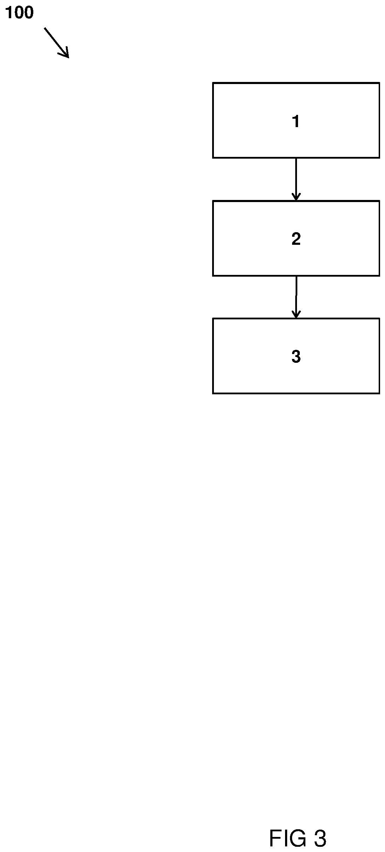

FIG 3 schematically depicts the method 100 of manufacturing a printable NTC ink composition according to the invention.

The method of manufacturing a NTC ink composition, comprises the step of mixing 1 at least a first and second ceramic powder precursor material, a second step 2 of heating the mixture and a third step of dispersing the formed printable NTC material in a suitable carrier.

Typically, the first ceramic precursor material comprises the A-type metal, i.e. the metal that is to be incorporated at the A-position of the spinel phase, e.g. manganese. Typically, the second ceramic precursor material comprises the B-type metal that is to be incorporated in to at least part of the B-positions of the spinel phase, e.g., nickel. The precursors, also referred to as starting compounds, are provided, e.g., weighed in, in accordance with a desired composition. The mixture comprises at least a Mn-oxide-based ceramic precursor and a second ceramic precursor material comprising nickel oxide. It will be understood that the second ceramic precursor material is added in an amount relative to the first ceramic precursor material including at least the amount required for forming the spinel phase. In addition, the mixture comprises an excess of the precursor material for forming the nickel oxide phase. Exact amounts of the ceramic precursor materials may be calculated depending on a desired amount of the NiO phase relative to the total printable NTC material and the desired overall composition of the spinel phase. For example, if one aims to manufacture a printable NTC material with 10 grams of a spinel phase with a general composition of Mn₂NiO₄ and 2 grams of NiO (20 weight percent), a suitable precursor mixture may comprise about 6.8 grams of Mn₂O₃ and 3.2 + 2.0 = 5.2 grams of NiO.

In principle any type of suitable ceramic precursor material (starting compounds) or combination thereof may be used. Suitable starting compounds include but are not limited to oxides, hydroxides, carbonates, acetates, and oxalates. In a preferred embodiment, ceramic precursor materials are used which are essentially the binary metal oxides of the respective metals comprised in the mixture., e.g., NiO and Mn₂O₃. In another or further embodiment, at least part of the first and/or second precursor materials is replaced by pre-fired NTC ceramic particles.

Preferably, the ceramic precursors comprised in the mixture are intimately mixed. Intimate mixing allows formation of a homogeneous powder mixture. Preferably, one or more, preferably all, of the ceramic precursor materials in the mixture are in a powder form, e.g., micro particles. Typically, the micro-particles have an mass-average diameter between 100 nm and 50 micrometers, preferably between 0.5 and 5 micrometers. Preferably the particles have an average dimension no larger than one hundred micrometer (D₉₀). Preferably all of the particles are smaller than one hundred micrometer. Large particles may have reduced printability and/or may lead to the formation of printed NTC products having inhomogeneous properties

In some embodiments, one or more of the ceramic precursors are mechanically crushed, e.g., ball milled or grinded into smaller pieces. Optionally or additionally, the particles are sieved through a number of sieves to provide a narrower distribution of particle size. For example sieving to get size distribution of particles below 10 µm, between 10-20 µm, and above 20 µm. In some embodiments the mixture of ceramic precursors is exposed to a mechanical crushing step, e.g., grinding or milling. This can reduce a number of processing steps and/or improve homogeneity of the mixture. Smaller particles and/or better intermixing was found to yield a printable NTC material with more reproducible electrical properties.

In the second step 2 the mixture is heated in the presence of an oxygen, typically air (calcination). The required calcination time maybe determined experimentally, e.g., by X-ray diffraction methods. Generally, a calcination time of about 2 hours was found to be sufficient. Calcination preferably includes exposing the mixture to a temperature of at least 750 °C, e.g., 850 °C or more. Temperature does not exceed sintering conditions, e.g., temperature does not exceed 1200°C. Preferably, the temperature does not exceed 1100 °C. Exposure to temperatures in excess of 1100 or 1200 °C can result in sintering and/or macro phase separation, i.e. formation of a macro phase separated second phase in addition to a spinel phase. Accordingly, the temperature during calcination is preferably in a range between about 800 and about 1050 °C. e.g., in a range between 850 and 1000 °C. Inventors found that calcination within said temperature range facilitates a solid-state reaction between the ceramic precursor material resulting in the formation of particles comprising a spinel phase and a nickel oxide phase

The oxidant may be included in and/or added to the mixture of ceramic precursors. Typically the mixture is calcined in the presence of air. Calcination in the presence of air advantageously provides an excess of oxidant, allowing spinel formation and the simultaneous removal, e.g. burning, of possible contaminations.

As explained, calcining said mixture of ceramic precursor materials at a temperature within said range for a suitable time and in the presence of a suitable amount of oxygen can result in the formation of a spinel phase having the desired composition. The reaction product, e.g., the printable NTC material, is not fully sintered. The particles in formed powder (the NTC material comprises) can advantageously have a dimension that is similar to the precursors, e.g., in a range between one hundred nanometer and one hundred micrometer, preferably in a range between five hundred nanometer and five micrometer. At least part of the particles, preferable the majority, most preferably at least ninety percent of the particles by weight comprises a spinel phase. In addition to the spinel phase the particles include a NiO phase.

The amount of NiO in the printable NTC material can vary over a broad range. It will be understood that the weight fraction of nickel oxide with respect to the overall mass of NiO and spinel phase within the printable NTC material is at least more than zero, e.g. above one weight percent.. From a theoretical point of view the majority of printable NTC material, e.g. in excess of fifty weight percent may be nickel oxide. For applications, wherein the mixture is used to manufacture a NTC product, e.g., a thermistor, an upper limit of fifty weight percent was found. Higher fractions of electrically insulating material were found to disrupt formation of an overall electrically conductive percolation network throughout the formed, e.g., printed, NTC product. Typically, the amount of nickel oxide is in a range between one and thirty weight percent. Preferably the amount of NiO is in a range between three and twenty weight percent, e.g. five or ten weight percent.

The spinel phase has a general formula AB₂O₄, wherein A represents a metal at A positions in the spinel crystal lattice and B represents an other and/or the same metal at B-positions. The spinel phase can be represented with the general formula M^{I}M₂^{II}O₄, (AB₂O₄). The spinel phase is believed to provide NTC electric properties to the printable NTC material. The NiO phase is an electrically insulating phase. In one embodiment, the spinel phase may be represented with a general formula M^{I}M₂^{II}O₄ Compared to Mn₃O₄, part of the Mn atoms may be understood to be replaced by Ni, yielding an coverall composition of Mn₃₋ₓNiₓO₄. In some embodiments, a higher nickel content within the spinel phase may be desirable. Accordingly, in some embodiments, x may be understood to range from 1 to 2.0 or 1.6. In some embodiments, x is in a range between 0.7 and 1.5. The amount of Ni that is incorporated is believed to affect the conductivity of the formed spinel.

In some preferred embodiments, the mixture of ceramic precursor materials additionally includes a third ceramic precursor material. The third ceramic precursor material comprises Iron (Fe), cobalt (Co) or copper (Cu), such as copper oxide or cobalt oxide. The iron, cobalt or copper can be incorporated in the spinel phase, e.g., along with the nickel and manganese. The molar ratio (Fe, Co or Cu)/Ni in the mixture of precursors is in a range between 0 and 0.25, e.g. between 0.001 and 0.25, e.g. between 0.01 and 0.25. Addition of Fe, Cu and/or Co was found to reduce the resistivity of the formed spinel phase enabling manufacturing of sensor products, e.g., thermistors, having a reduced overall electrical resistance. By addition of the third precursor material the formed spinel phase ceramic has a generic formula M^{I}M^{II}O₄, wherein M^{I} can be understood to represent Mn, and wherein M^{II} can be understood to represent Mn_{2-x-y}Ni_{x-y}M^{III}_{y} (resulting in an overall formula Mn_{3-x-y}Ni_{x-y}M^{III}_{y}), wherein M^{III} is Fe, Co or Cu and wherein x is in a range between 0.70 and 1.5, and y is in a range between 0 and 0.25, e.g. between 0.001 and 0.25. In embodiments comprising Fe, Co or Ni such addition may be understood to result in the formation of a spinel phase ceramic wherein part of the nickel is replaced with copper or cobalt.

The method preferably does not comprise a sintering step to make dense ceramics. A sintering step may be understood to comprise heating at a temperature above 1100°C, e.g., in a range between 1100 and 1400 °C, e.g., between 1200 and 1300 °C. Exposing the mixture of ceramic precursor materials or the formed printable NTC material to a sintering step was found to result in sintering including a macro phase separation yielding an unstable ceramic product comprising a macro phase separated second phase, e.g., a NiO besides a spinel phase. By not exposing the mixture nor the formed printable NTC material (comprising particles with a spinel phase and a NiO phase) to temperatures above a phase segregation temperature for said composition, formation of a second phase can be avoided.

The first and second and any other ceramic precursors comprised in the mixture preferably comprise binary oxides of the respective metals, e.g., NiO and Mn₂O₃. More preferably, the first and second ceramic precursor and any other ceramic precursors such as copper or cobalt-based precursors comprised in the mixture essentially consist of binary oxides. Using ceramic precursors that comprise, preferably essentially consist of, binary metal oxides can reduce a level of impurities (e.g., reduce impurities due to remaining ligands or decomposition products formed thereof during the calcination) in the formed printable NTC material.

In some embodiments, after calcining the mixture is cooled at a controlled rate. The cooling rate was surprisingly found to effect the thermo-electric behavior of sensing materials, e.g., thermistors, comprising the formed printable NTC material. In some embodiments, the cooling rate is controlled at a rate below about 400 °C per hour or about 300 °C per hour, e.g. at one hundred, two hundred or three hundred °C per hour. In other embodiments the mixture is quenched. Quenching can be understood as to relate to a near instantaneous cooling from an initial temperature, e.g. 1000 °C of a final temperature, e.g. 50 °C. Near instantaneous can be understood as completing at least ninety percent of the cooling trajectory in a period of minutes, e.g. fifteen or ten minutes, preferably faster, e.g. within five minutes or even within one minute such as in thirty seconds. For example, a sample heated at 1000 °C may be quenched to 50 °C with a cooling rate of in excess 4000 °C per hour, e.g., about 8000 °C/h or faster. Faster cooling was found to yield a decreased overall resistance in NTC sensors formed from the printable NTC material as described herein. Quenching was further found to yield improved stability as compared to samples of identical composition that were slowly cooled.

In the third step 3 the formed particles are dispersed in a suitable printable carrier. The relative amount of printable NTC material preferably ranges between thirty and sixty-five volume percent (about seventy and ninety weight percent). The relative amount of printable carrier therefore preferably ranges between thirty-five and seventy volume percent (about ten and thirty weight percent). As a result there is provided a printable NTC ink composition comprising a suitable printable carrier and particles with spinel and NiO phase dispersed therein, which spinel phases can be characterized according to a generic formula M^{I}M^{II}O₄, wherein M^{I} represents Mn, and wherein M^{II} represents Mn₂₋ₓNiₓ. That is, having an overall composition Mn₃₋ₓNiₓO₄, wherein x is in a range between 0.7 and 1.5, or according to a generic formula M^{I}M^{II}O₄, wherein M^{II} represents Mn_{2-x-y}Ni_{x-y}M^{III}_{y} (overall composition Mn_{3-x-y}Ni_{x-y}M^{III}_{y}O₄) wherein M^{III} is Fe, Co or Cu, and wherein x is in a range between 0.7 and 1.5, and y is in a range between 0 and 0.25, e.g. between 0.001 and 0.25.

Optionally or in addition, the printable NTC material as described herein may be mechanically crushed into smaller particles. Mechanical crushing may include sieving e.g., sieving through a number of sieves, to provide a narrower distribution of particle size or to remove particles of a certain size or greater. For example to get a portion of particles with a size distribution of below ten µm, a portion with a size between ten and twenty micrometer, and a portion of larger particles . Use of smaller particles can reduce a sedimentation rate, i.e. improve stability of suspensions of such particles in a carrier, e.g., an ink or paste.

The suitable printable carrier per se may be known. The printable carrier typically includes at least a solvent, that can evaporate at temperatures below 300°C, preferably below 200°C to reduced a thermal load on a printed NTC product. The term 'printable' is not to be construed to be limited to low viscosity formulations such as inks suitable for inkjet or spray deposition processes but explicitly includes comparatively high viscosity compositions such as a paste which may be particularly suitable for manufacturing processes including screen printing. Reference is made to WO2018164570 (which is hereby incorporated by reference) for details on possible compositions of the printable carrier, the level of spinel phase particles dispersed therein and for further additives which may be included. In particular it is to be understood that the suitable printable carrier preferably comprises a dielectric matrix which is non-conducting. The dielectric matrix may function as a binder e.g., a curable binder, to improve printing behavior of the ink and/or to provide mechanical stability of printed products, e.g. after curing. By mixing the particles (the printable NTC material) in a concentration such that they contact each other after application (e.g. after printing) to form an interconnected network in the sensor material, it is found that the thermo-electric properties of the NTC material can be retained without the need to merge the particles by melting or sintering. Accordingly, a printable temperature sensor is provided with reliable electrical properties which can be applied e.g., to conventional substrates under low temperature conditions. By providing the volumetric ratio of the particles with respect to the dielectric matrix well above a percolation threshold, it may be ensured that the micro-particles form a connected component throughout the dielectric matrix on the order of a size of the electrode gap. This may typically be achieved by providing the micro-particles with a relatively high packing density, e.g., more than 0.5 (fifty percent), preferably more than 0.7. The minimum desired ratio can also be measured experimentally from the conductivity or resistance behavior of the sensor material. For example, the ratio of the micro-particles with respect to the dielectric matrix is preferably sufficiently high to have a conductivity of the sensor material approach that of the pure NTC material, e.g., within fifty percent having practically the same conductivity as the pure NTC material. For typical materials this may correspond to a mass ratio of the micro-particles with respect to the dielectric matrix of more than three to one.

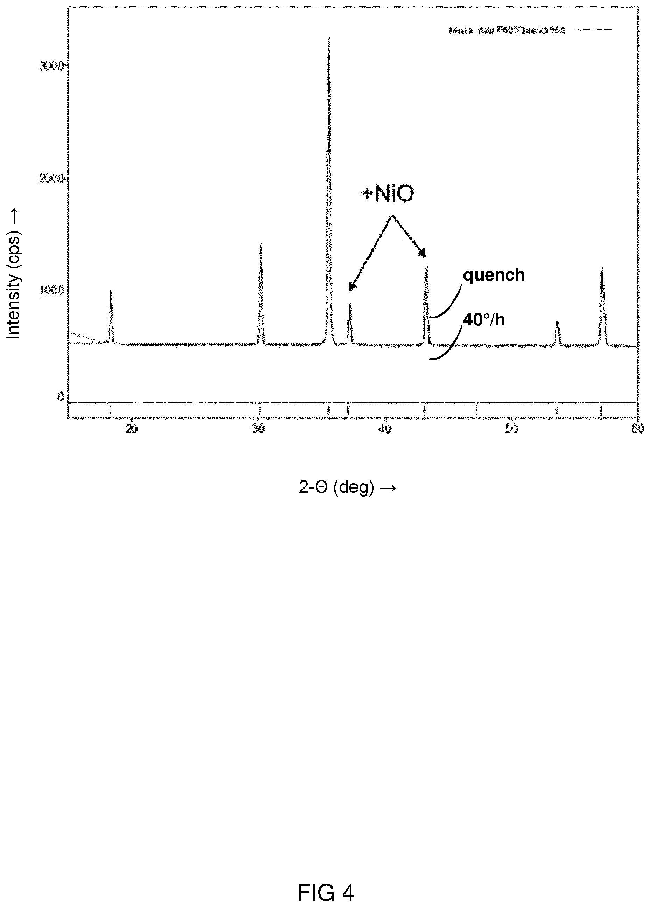

FIG 4 depicts an XRD diffraction pattern of a printable NTC material composition manufactured according to the invention. The NTC material includes a NiO phase and a spinel phase with the composition Mn_{1,74}Cu_{0,16}Ni_{1,1}O₄. The amount of NiO phase is five weight percent. The printable NTC material was formed from a mixture of the corresponding binary metal oxide powders that were weighed in in the corresponding amounts. Said mixture was calcined for two hours in the presence of air at a temperature of 950°C. Part of the calcined mixture was quenched to room temperature (indicated 'quench'), part of the calcined mixture was cooled at 300°C/hour (indicated '300°C/h'). The XRD diffraction pattern indicates presence of a spinel phase with NiO both cooling rates.

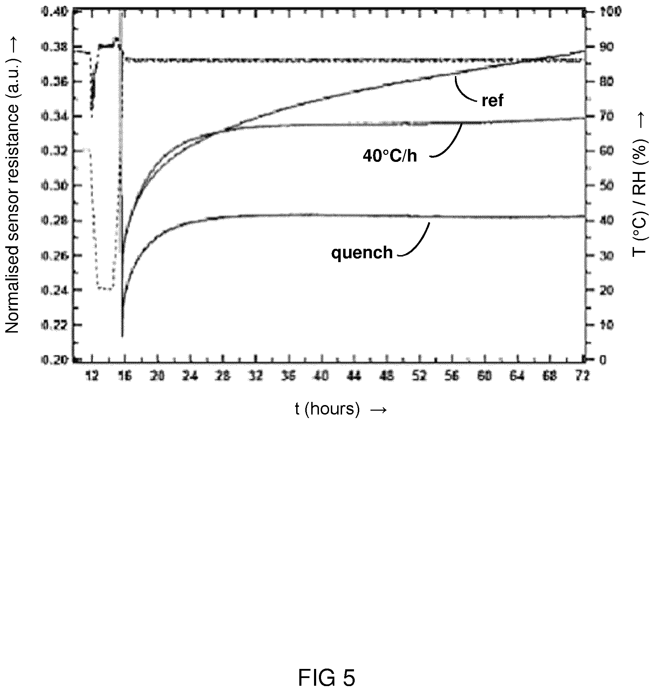

From these powders printed sensors (thermistors) were made. The performance of these thermistors was compared against a thermistor made using the under similar conditions but using a known composition with comparable spinal phase composition but without additional NiO phase (indicated 'ref'). The electric properties (resistivity) of these thermistors was followed as a function of time at about 85°C and at about 85% relative humidity (RH). From the graph (FIG 5) is clear that the thermal stability of thermistors formed according to the invention levels off after about 8 hours into the exposure, whereas the normalized resistance of comparative thermistors continues to drift. Further it can be seen that the absolute value of normalized resistance for sensors made from quenched printable NTC material according to the invention is below the resistance of samples that were acquired using a cooling rate of 300°C/h.

For the purpose of clarity and a concise description, features are described herein as part of the same or separate embodiments, however, it will be appreciated that the scope of the invention may include embodiments having combinations of all or some of the features described.

In interpreting the appended claims, it should be understood that the word "comprising" does not exclude the presence of other elements or acts than those listed in a given claim; the word "a" or "an" preceding an element does not exclude the presence of a plurality of such elements; any reference signs in the claims do not limit their scope; several "means" may be represented by the same or different item(s) or implemented structure or function; any of the disclosed devices or portions thereof may be combined together or separated into further portions unless specifically stated otherwise. Where one claim refers to another claim, this may indicate synergetic advantage achieved by the combination of their respective features. But the mere fact that certain measures are recited in mutually different claims does not indicate that a combination of these measures cannot also be used to advantage. The present embodiments may thus include all working combinations of the claims wherein each claim can in principle refer to any preceding claim unless clearly excluded by context.

## Claims

1. A method of manufacturing a NTC ink composition, the method comprising:
- manufacturing a printable NTC material comprising particles, the particles including a spinel phase comprising Mn and Ni and a nickel oxide phase; and
- dispersing said printable NTC material in a suitable printable carrier;
wherein manufacturing the printable NTC material comprises:
o mixing particles of at least a first ceramic precursor material comprising Mn and particles of a second ceramic precursor material comprising Ni, the particles of the first and second ceramic precursor material having a diameter in a range between one hundred nanometer and one hundred micrometer, and wherein the second ceramic precursor material is added in excess relative to the first ceramic precursor for forming the nickel oxide phase; and
o heating said mixture of ceramic precursor materials at a temperature between 800 °C and 1000 °C in the presence oxygen to form the printable NTC material comprising particles that include a spinel phase comprising Mn and Ni and a nickel oxide phase, wherein the weight fraction of the nickel oxide phase with respect to the overall mass of the printable NTC material is in a range between one and thirty weight percent.

2. The method according to claim 1, wherein the spinel phase has an overall composition Mn₃₋ₓNiₓO₄, and wherein x is in a range between 0.7 and 1.5.

3. The method according to claim 1, wherein the mixture of ceramic precursor materials comprises a third ceramic precursor material comprising a transition metal ion selected from Fe, Co or Cu, wherein the molar ratio (Fe, Co or Cu)/Ni in the mixture is in a range between 0.001 and 0.25 to form a spinel having an overall composition Mn_{3-x-y}Ni_{x-y}M^{III}_{y}, wherein M^{III} is Fe, Co or Cu, wherein x is in a range between 0.7 and 1.5, and wherein y is in a range between 0.001 and 0.25.

4. The method according to any of the preceding claims, wherein the method comprises:
- grinding or milling the formed printable NTC material.

5. The method according to any of the preceding claims, wherein the first and second ceramic precursor materials, and further ceramic precursor materials if any, are essentially formed of binary metal oxides.

6. The method according to any of the preceding claims, wherein after heating said mixture is allowed to cool at a rate below 400 °C per hour.

7. The method according to any of claims 1-5, wherein after heating said mixture is quenched.

8. A printable NTC ink composition comprising:
- an acceptable printable carrier, and
- a printable NTC material dispersed therein, the printable NTC material comprising particles having a diameter in a range between five hundred nanometer and fifty micrometer, and wherein the particles comprise a spinel phase and a nickel oxide phase, the spinel phase comprising Mn and Ni; and wherein the weight fraction of nickel oxide with respect to the overall mass of the printable NTC material is in a range between one and thirty weight percent.

9. The printable NTC ink composition according to claim 8, wherein the spinel has an overall composition Mn₃₋ₓNiₓ, wherein x is in a range between 0.7 and 1.5.

10. The printable NTC ink composition according to claim 8, wherein the spinel phase has an overall composition Mn_{3-x-y}Ni_{x-y}M^{III}_{y}, wherein M^{III} is Fe, Co or Cu, and wherein x is in a range between 0.75 and 1.5 and y is in a range between 0.001 and 0.25
